# EUROPEAN PATENT APPLICATION

(11) **EP 1 302 783 A1**
(43) Date of publication of application: **16.04.2003**
(21) Application number: 02396149.3
(22) Date of filing: 04.10.2002
(51) Int. Cl.: G01S 5/02, G01S 5/00, H04Q 7/38

(54) **Location of a mobile terminal**

(30) Priority: 10.10.2001 FI 20011972
(71) Applicant: Elisa Communications OYJ, 00130 Helsinki (FI)
(72) Inventor: Virtanen, Jukka, 02920 Espoo (FI); Parkkila, Seppo, 00440 Helsinki (FI); Sippola, Timo, 01450 Vantaa (FI); Kuosmanen, Pauli, 36200 Kangasala (FI)
(74) Representative: Savela, Antti-Jussi

(57) **Abstract**

The objective of the invention is the positioning of a mobile terminal in a cellular-based radio communication network. A set of prediction parameters, representing the electro-magnetic field of a cell, is determined in the network design system automatically for each cell in the network, in specified intervals. A model of the radio coverage area of the cell is generated by attaching to each prediction parameter the corresponding location data in the radio coverage area. The probability value of the location of the terminal is calculated in relation to the location data of each prediction parameter, by applying a special penalty function to the measurement parameter determined by the terminal and to the prediction parameter of the model of the radio coverage area. As a result a set of probability values representing the location of the terminal are obtained which are projected by means of a special combination function into one plane and narrowed into a single data specifying the location of the terminal.

## Description

### Field of the invention

In general the invention is concerned with determining the position of a mobile terminal in a system in which part of the subscription connection consists of a radio link between the terminal and an access node. The system may be a cellular-based mobile telephone system where the terminal is capable of moving from one cell to another and from one traffic area to another, during the subscription connection.

### Background of the invention

The movements and location of mobile terminals, e.g. a mobile station, within a network, is a service that is increasingly in demand by service providers and network operators. There are several reasons for such a service. The service providers want to provide location-bound mobile communication services. For example the customer might request a service based on his current location, in which it would be possible to utilize the services of a company nearest to that location. As an example, information on the nearest restaurant, gas station, a particular shop, etc. could be mentioned. Some companies might also be in need of following the movements of their mobile equipment. For example it takes less time to guide a delivery veichle or a taxi to a customer when the location of the car is known. In some cases the authorities want to survey the movements of a specific mobile station in the network. It is especially important to locate emergency calls, as the caller isn't necessarily aware of his location or is not able to express it. The more accurate the location data is conveyed, the easier and faster the rescue arrives.

There already exist various methods for locating a mobile station. These methods can be divided into three different categories in respect to their method of implementation, i.e. network positioning, terminal positioning and hybrid positioning.

Network positioning is based on the physical structure of the radio network or on a specific coverage area of the serving cell. One of the methods employed in network positioning for locating a mobile station is called the triangulation method.

Terminal positioning is a method bound to data terminal equipment. GPS-method (Global Positioning System) is based on global determination of the location, and serves as an example. GPS-receiver receives signals from satellites orbiting around the earth and calculates the position utilising the data contained in the signals. As a minimum, four simultaneously visible satellites are required for continuos three-dimensional positioning. The terminal may be either a GPS-receiver or a mobile station with an integrated GPS-receiver. The positioning accuracy depends on the GPS-equipment used; there is equipment available both for professional and amateur requirements.

Hybrid positioning relates to a combination of the two previously mentioned methods.

The positioning accuracy of the various methods varies greatly depending on the objectives pursued, the surroundings and the method employed. In professional usage, such as land surveys, better accuracy is required as compared to spare time usage. The range of the positioning accuracy with one receiver employed currently varies from some tens of meters to various kilometres.

The methods employed in cellular network systems include e.g. methods based on angle of arrival (AOA), time difference (e.g. E-OTD, Enhanced Observed Time Difference) and correlation. The last of these methods will be discussed briefly below.

The idea behind the positioning method based on correlation is to determine and save into a database the signalling information observed by the mobile station from the entire coverage area of the positioning system. Depending on the system employed, the information samples contained in the database consist of data on the signal strength, the time delay of the signal, or the impulse response of the channel. The location-dependent parameters defined in a GSM system include LAC (Location Area Code), ID or the identifier of the serving cell, TA or the timing advance of the transmission and the signal strength of the serving cell and the neighbour cells (normally 6 neighbour cells).

Both the mobile station and the network are aware of these parameters while in an active state. Even in dormant state the mobile station measures the signal strength, and knows the cell identifier of the cell transmitting the strongest signal. The network, however, only has knowledge of the location area code, LAC, of the above-mentioned parameters. The mobile station transmits the parameters required in positioning to a positioning server.

The positioning server applies a certain correlation algorithm to calculate the location of the mobile station by comparing the data sent by the mobile station to the information sample saved in the database.

The positioning methods presented above contain various disadvantages.

Positioning based on GPS-technology is an accurate method but integrating a GPS-receiver to a mobile terminal is expensive to realize for industrial production. Battery consumption of a combined GPS-receiver-mobile station is naturally considerably greater than with a plain mobile station. Furthermore, GPS-positioning does not apply very well to urban or indoor environments.

The method based on the angle of arrival (AOA) is expensive economically: the technology requires auxiliary antenna groups in the base station. In addition the method is impractical in micro cell base station locations. Also, it does not function optimally in an urban environment where the buildings absorb part of the signal and cause signal reflections. Because of the multipath reflection, observing the angle of arrival of the signal is more difficult in an urban environment than in an open environment where there exists eye contact with the base station.

The E-OTD method also requires modifications in the terminal, as well as inserting new hardware in the network.

The disadvantages with the method based on correlation is in keeping the database up-to-date. Changes occur in the network continually as new base stations are added, and old base stations are replaced with new ones, etc. This positioning system might suit best for usage in a small, confined area. Since the database is based on field measurements, updating the database requires daily field measurements. In a comprehensive network of a large area, the implementation would require enormous expenses.

### Summary of the invention

The invention is connected to a generic positioning method of a terminal in a cellular-based radio communication network. The objective is to accomplish an implementation that can be applied both to new and existing networks, without causing major expenses, but eliminates the defects of the positioning methods mentioned above.

The objectives are achieved in the manner described in the independent patent claims. Preferred embodiments of the invention are described in the dependent patent claims.

The idea behind the invention is to determine the location estimate of a terminal moving in the network by means of the data measured by the terminal, such as RF-signal strength, estimation of parameters representing the electro-magnetic field of the radio coverage area of a cell (base station), and a function predicting the probability of the location of a terminal, e.g. penalty function, and a special combination function.

In generating the prediction parameters representing the electro-magnetic field of the radio coverage area, a network design tool of the network design system is utilized. A static database is formed in a special positioning server from the prediction parameters created by the network design tool of the design system. The network design system updates the database automatically between specified intervals and/or when needed.

For each cell in the cellular network a raster model of the radio coverage area is formed, a kind of ground map, representing the coverage area of the base stations in the cell. The rasters are employed to represent the intensity of the prediction parameter used, e.g. by different colours or hues. Depending on the implementation, the prediction parameter could be RF-signal intensity, signal transit time delay, bit energy or some other parameter characterising the coverage area. In some implementations, various parameters representing the coverage area can be utlized, instead of only one.

Once the network receives a service request referring to the location of a mobile terminal, the process of determining the position of the terminal is initiated. Based on the data contained in the message of the terminal, the network knows the identity of the terminal, the serving cell and the neighbour cells of the serving cell. The prediction parameters representing the coverage area of the cells (base stations) in question, have been saved in the static database.

The penalty function is applied to at least one measurement parameter determined by the terminal, and to the corresponding prediction parameter in the raster ground map. As a result of the comparison, a set of probability values representing the location of the terminal, are produced in the ground map of the serving cell and possibly at least one neighbour cell. The probability values of the different ground maps are projected to a single plane by means of a special combination function and are narrowed to a single piece of information specifying the location of the terminal.

### Brief description of the drawings

In the following, the invention is described in more detail through the accompanying figures where
- Figure **1**: illustrates the implementation of the invention for locating a terminal in a radio communication-based network,
- Figure **2**: shows the predicted coverage area of a specific base station cell in a network design system,
- Figure **3**: shows the conversion of the predicted coverage area presented in figure 2 into raster grids,
- Figure **4**: illustrates predicted field strengths of three different cells in a specific raster grid,
- Figure **5**: shows predicted field strengths of a serving cell on a ground map,
- Figures **6-7**: show predicted field strengths of cells adjacent to the serving cell on a ground map,
- Figure **8**: illustrates the values given by the penalty function of a cell for the raster squares of the ground map of the serving cell,
- Figures **9-10**: illustrate the values given by the penalty function of a cell, for the raster squares of the ground maps of the neighbour cells of the serving cell,
- Figure **11**: shows the location data prediction of the penalty functions of the cells, projected to a single plane, and
- Figure **12**: illustrates the combining of probability values given by penalty functions of three cells.

### Detailed description of the invention

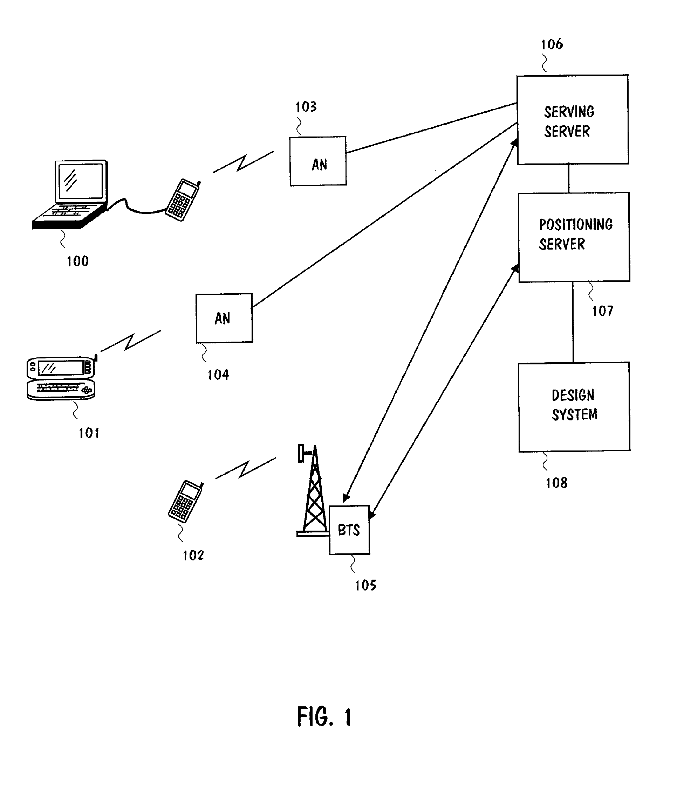

To smoothen the comprehension of the generic positioning method utilized in the invention, which pertains to the category of network positioning, we shall review with the help of the figures **1-12** how the location of a terminal in a cellular-based mobile station network is specified by combining the measurement data given by the mobile station to the prediction data given by the design system.

The positioning method is not bound to any specific technology. For example, the method can be implemented in GSM (Global System for Mobile Communications), GPRS (General Packet Radio Service), UMTS (Universal Mobile Telecommunications System), WLAN (Wireless Local Area Networks), etc. cellular network systems, in both indoors and outdoors environments. Also, the method does not require modifications in the terminal.

Below the invention is described in detail, particularly in connection with the digital GSM mobile telephone system. It is worth observing that the invention is not confined to what is illustrated in the example only but can be adapted for any technology used.

In figure **1** the terminals **100-102** are connected to the network through the access nodes (AN) **103-104** and the base station (BTS, Base Transceiver Station) **105**. We shall now consider the mobile station **102** connected to the base station **105** more closely. The base station guides the activities of the mobile station e.g. by giving the synchronisation and by assigning the correct transmission power that should be used for the transmission. Normally the mobile station monitors the Broadcast Control Channel BCCH of the base stations of six neighbour cells and therefore knows the transmission frequency and power, the cell identifier and the base station identification code of these base stations. The mobile station uses the identification code of the base station to identify the surrounding cells and to confirm that it is listening to the correct cell and correct frequency. Because of this, the mobile station for example does not accept a stronger signal coming from a more distant cell with the same frequency since the identification code attached is incorrect.

The mobile station measures, according to the prior art, the strength (RxLev) and quality (RxQual) of the downlink signal received from the base station of the serving cell. Respectively the base station of the serving cell measures the strength and quality of the uplink signal received from the mobile station. Based on these measurements and the power regulation parameters installed, the power regulation algorithm specifies the corresponding transmission power level, which is notified to the mobile station by an power regulation order. The power regulation cannot be used with a downlink BCCH-carrier wave. Variations in field strengths are usually due to factors in the environment; the signal becomes fainter in different ways depending on the terrain shapes (mountains, valleys, waterways, etc.) and the human-made surroundings (tall buildings, underground premises, etc.). The power of a radio wave, while passing through the air, is decreased in inverse proportion to the square of the distance (d⁻²). But while in urban surroundings, the received power at ground level has been calculated to typically change in inverse proportion to the fourth power of the distance (d⁻⁴).

As mentioned before, the mobile station also measures signal levels of the surrounding cells. It transmits the measurements as a report message to a serving base station, which sends them further to the base station controller (BSC) (not shown in the picture).

When the mobile station wants a location-dependent service it sends a service request message, e.g. "where is the nearest gas station?", to the nearest serving base station **105**. From there the service request message is redirected in the network via the base station controller and the central (not shown in the picture) to a special serving server **106**. How and in what form the service request is presented in the mobile station depends both on the terminal used and the service provider. A service requested by a mobile station is suggested here only as an example. The invention is not limited to offering the service for a mobile station, the service can be offered to e.g. another service operator or the authorities.

Once the serving server realizes that the service request message is related to a location-dependent service, it sends a positioning request message to the positioning server **107**. Based on the data contained in the message the serving server knows the identifier specifying the mobile station and the cell in whose area the mobile station is located at the moment of the request. As a response to the request the positioning server sends a message to the mobile station requesting for the RF-signal values measured by the mobile station, i.e. the RF-signal values of the serving cell and of the neighbour cells. As a response to the request made by the positioning server, the mobile station sends the data of the three cells C1-C3 it has determined in this example: the RF-signal value RX_m1 = -57 dBm of the serving cell C1, the RF-signal value RX_m2 = -77 dBm of the neighbour cell C2, and the RF-signal value RX_m3 = -88dBm of the neighbour cell C3.

The field strengths modelled after the coverage areas of the cells of the serving base station and the adjacent base stations, received from the design system **108**, have been saved in the database of the positioning server.

The design system consists of a coverage area database and a digital ground map of the coverage area of the cellular network. The ground map contains among other things information on the landscape (fields, trees, waterways, etc.), data on buildings and altitudes of terrain and buildings. In addition the design system includes previously generated models of the propagation of the radio signal. The coverage area database contains a prediction of the radio coverage area for the measurement parameters, which include e.g. power level or time delay. The design system includes a network design tool and tools for gridding the geographical coverage area of the cellular network in squares of convenient size and for generating the probable power level value in each square of the area covered by the square.

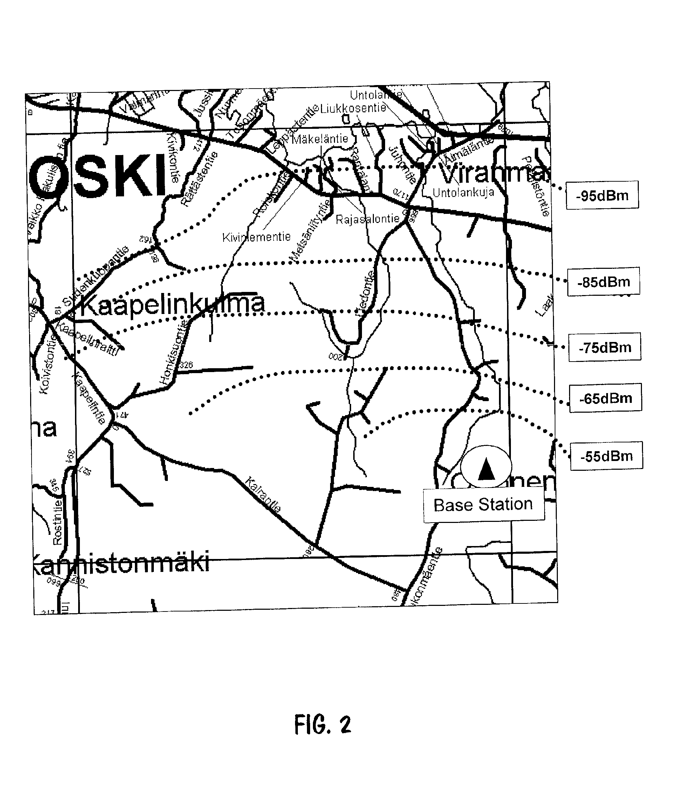

Figure **2** illustrates the field strength of the coverage area of the base station as a function of distance. The different field strengths of the coverage area have been denoted in the figure by curves. The field strength values corresponding to the curves have been presented in dBm in the figure. The better the source material of the design system, the better the accuracy the coverage area produced by a base station in nature can be predicted with. The accuracy is influenced among other things by the quality of the maps (city maps, road maps, terrain maps, sea maps), the propagation model of the signal, accuracy of the propagation model and calibration of the model. Radio waves proceed in a manner conditioned by the terrain conditions and the radiation pattern of the antenna, and therefore in actuality the audibility area is fractalic in shape, containing holes and islands. Simple geometry cannot be applied to the environment. Because of the above-stated it is impossible to specify the field strength with accuracy. However by averaging, it is possible to smooth many of the effects of the variables found in nature.

The size and shape of the squares of the coverage area of each cell depends on the environment of usage: in an urban environment it is worthwhile to choose a smaller size for the square than in sparsely populated areas. For each cell a grid of its own is created and the field strength predictions are generated for each square. As a result a RX_e table for the predicted values of the RF-signal is produced.

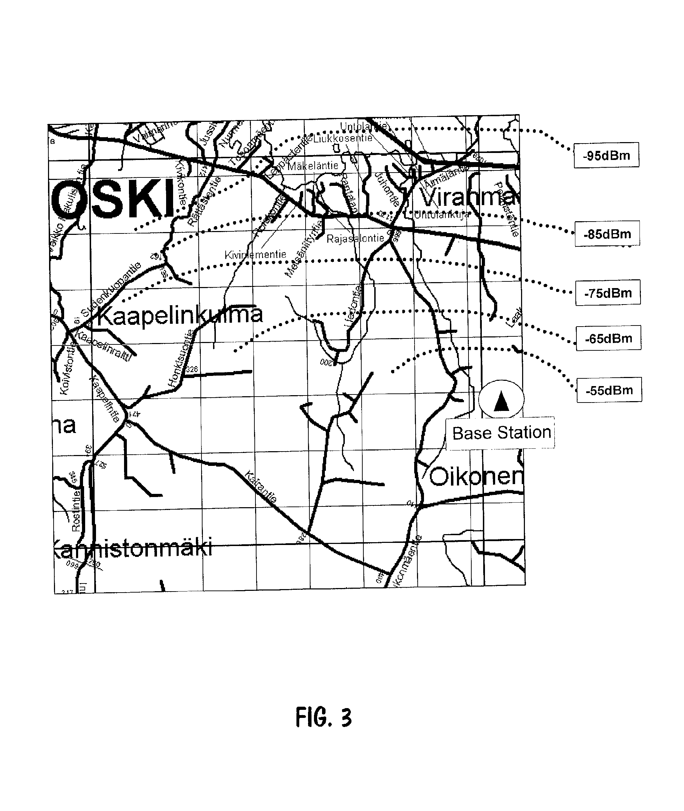

In figure **3** a model of the coverage area of a cell and the division of the area in grids is illustrated. In the figure, each square corresponds to a geographically unambiguous area, based on the known co-ordinates and the shape and measures of the square. Each square contains the field strength average predicted for the base station cell of the area confined by the square. As we can see in the picture, the field strength can vary greatly in the area inside some squares, i.e. the field strength can have various different values inside one square. In a situation like this a range of variation for the field strength can be defined in the square. If necessary the square size can be increased or decreased.

The design system forms a static ground map, which it sends to the positioning server. It is necessary to update the ground map data continuously due to the daily changes occurring in the network. E.g. new base stations are added to the network, old ones are removed or replaced by new ones. Verification and adjustment of the ground map data is carried out automatically and preferably e.g. by night using the cellular network database. The positioning server carries out the actual mathematical computation of specifying the location co-ordinates for the mobile station.

Each cell in the area examined gives a unique predicted field strength average for the square.

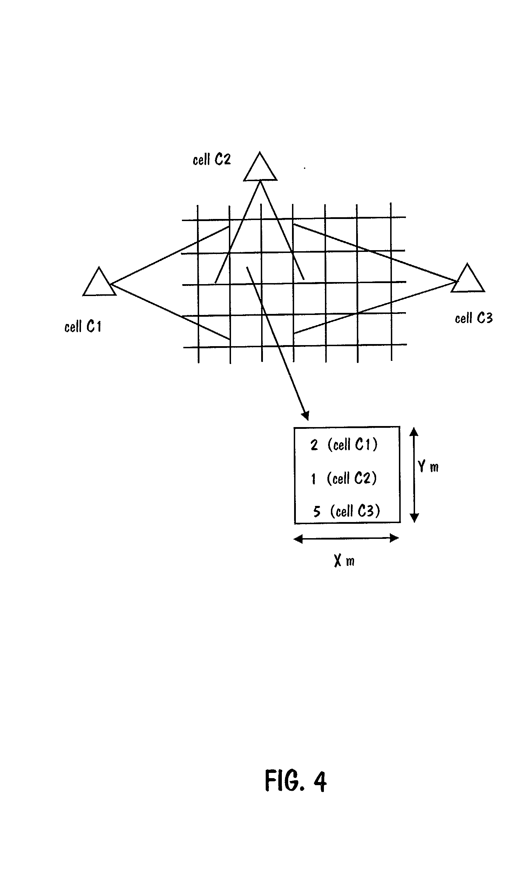

Figure **4** shows the predicted field strengths produced by base stations in three cells in a single square of the map. In the square chosen for this example the cell C1 has a relative field strength value of 2, cell C2 1 and cell C3 5. The relative values are defined by calculating the averages of the field strength values, e.g. in the manner shown in the table below. In accordance with the table, if the absolute field strength value in the area examined varies in the range of -71 dBm - -80 dBm, then the averaged relative field strength value equals 4.

| Absolute value (- dBm) | Relative value |
|---|---|
| 41-50 | 1 |
| 51-60 | 2 |
| 61-70 | 3 |
| 71-80 | 4 |
| 81-90 | 5 |

In the following, determining the position of a mobile terminal is described in more detail.

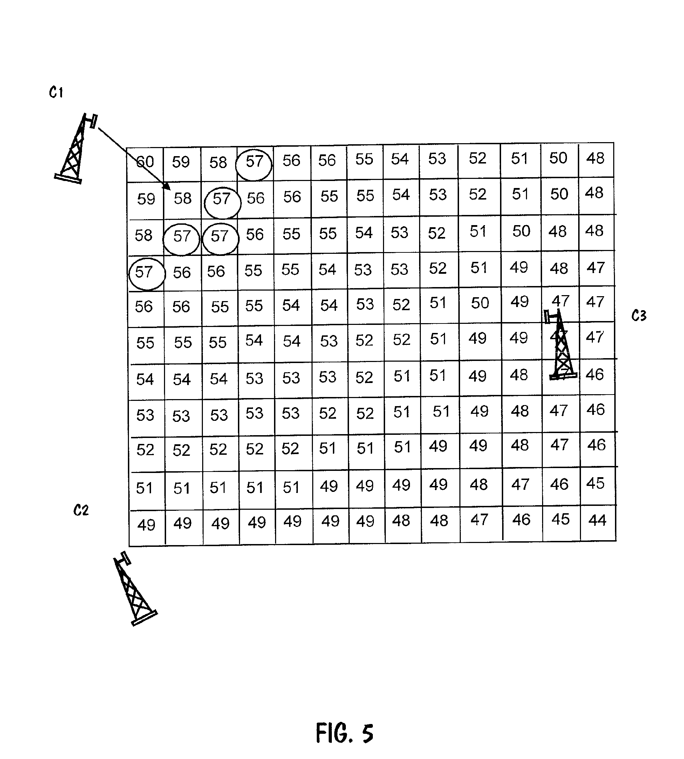

First the positioning server picks the static ground maps for the field strengths of cells C1-C3 which are illustrated in the figures **5 -7.** For the sake of clarity, the predicted numerical field strength values have been indicated in the figures in dBm.

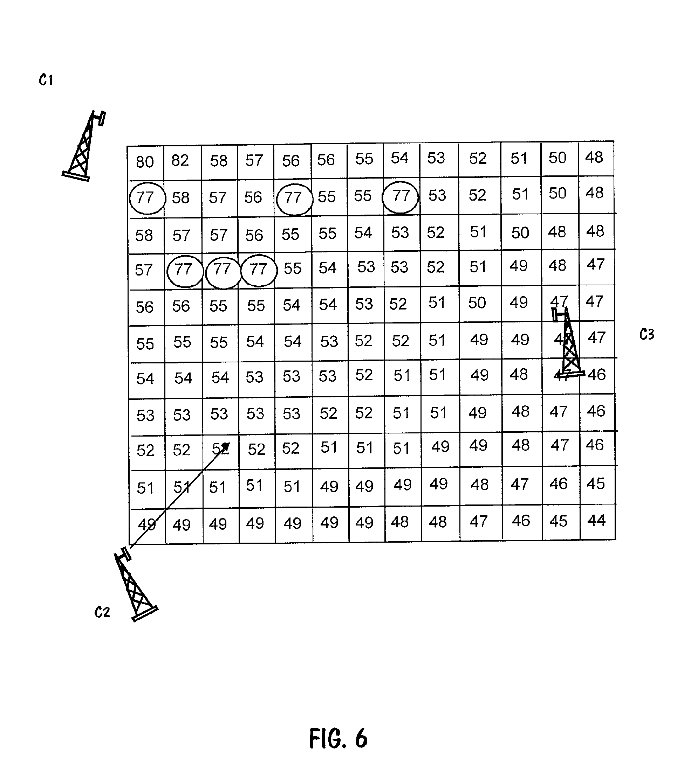

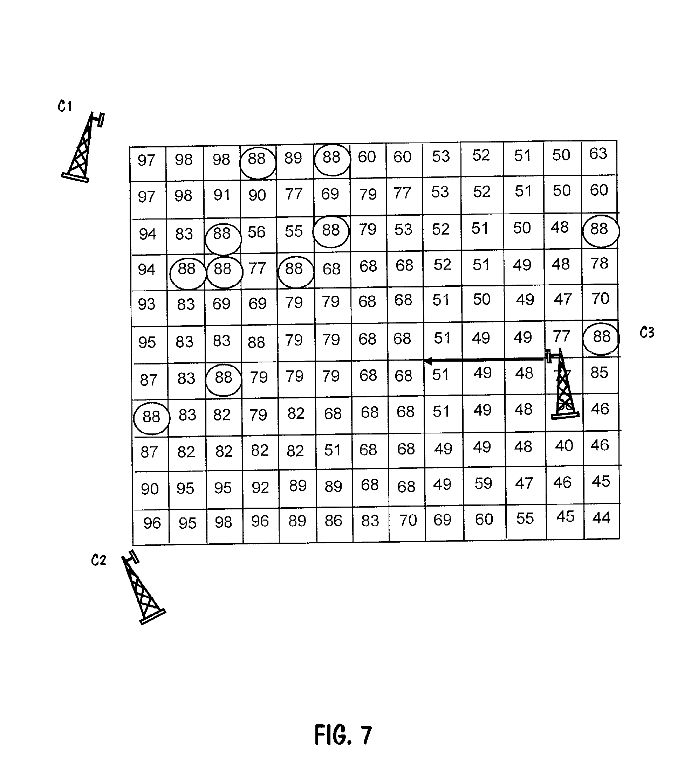

Figure **5** shows predictions of the serving cell C1. The arrow represents the antenna direction of the base station. The positioning server compares the RF-signal value sent by the mobile station to the field strength values in the ground map. In the figure, the five most probable locations found for the mobile station are shown. An analogous comparison is made between the field strength ground maps of the cell C2 in figure **6** and cell C3 in figure **7** and the RF-signal value sent by the mobile station. Six most probable locations for the mobile station were found in the map of cell C2 and 11 in the map of cell C3. In figure **7** there appear two similar values of field strength in both the back beam and the front beam of the antenna unit. These two predicted locations can be eliminated as unlikely leaving nine possible locations for the mobile station. We will return to this later in the text.

For each cell a so-called penalty function, applying to that cell only, has been defined. It is used to carry out a comparison between the predicted field strength Rx_e and the measured field strength Rx_m. The determination of the penalty function is influenced fundamentally by the physical and electrical properties of the base station and the antenna, such as the type and age of the base station and the location of the base station (city, countryside, sea), antenna type, location (in the mast, on the wall), amplification, width of the antenna beam and the ratio between the front and back beams. There are several factors of influence, only some of the most important have been mentioned above as an example. The penalty function also has to be continually revised and adjusted in order to correspond to changes occurring in the network. If several factors of uncertainty are involved with a given cell/base station, the penalty function can be chosen in a way that does not penalize strongly variations of e.g. five units between the predicted and measured value. If more than one squares in the chart have the same probability value given by the penalty function, the probability values in the squares surrounding the square in question are examined and an additional comparison for these squares is carried out. As a result of this additional comparison it is possible to filter out the unlikely areas confined by the squares. Also, too "distant" good probability values are filtered out, if the emphasis of the results backs the elimination. The more unlikely the area of a square examined is for a possible location of the mobile terminal, the more penalty points the penalty function gives.

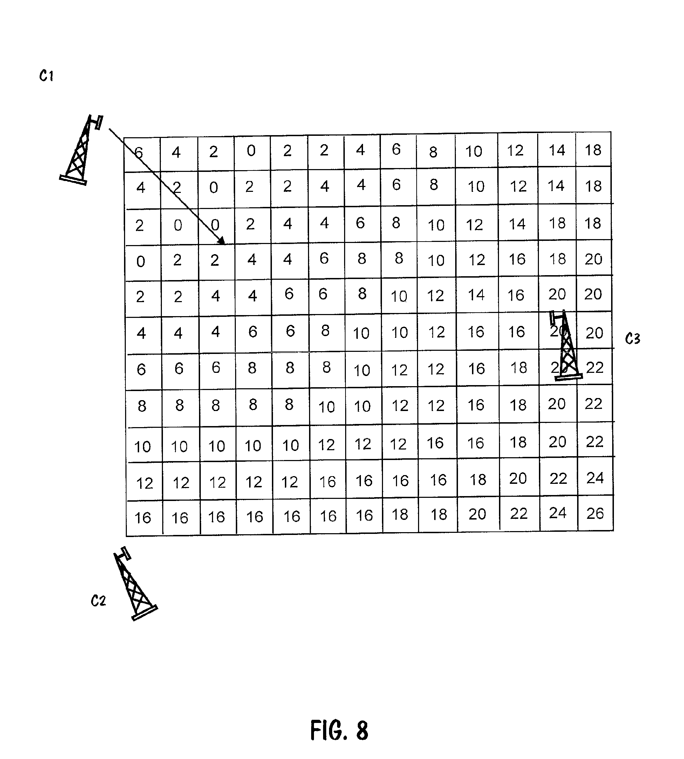

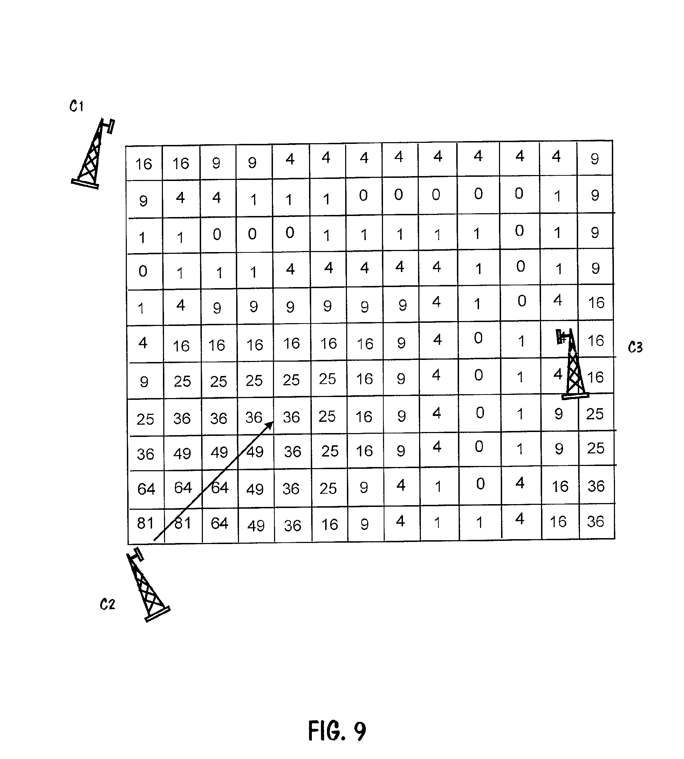

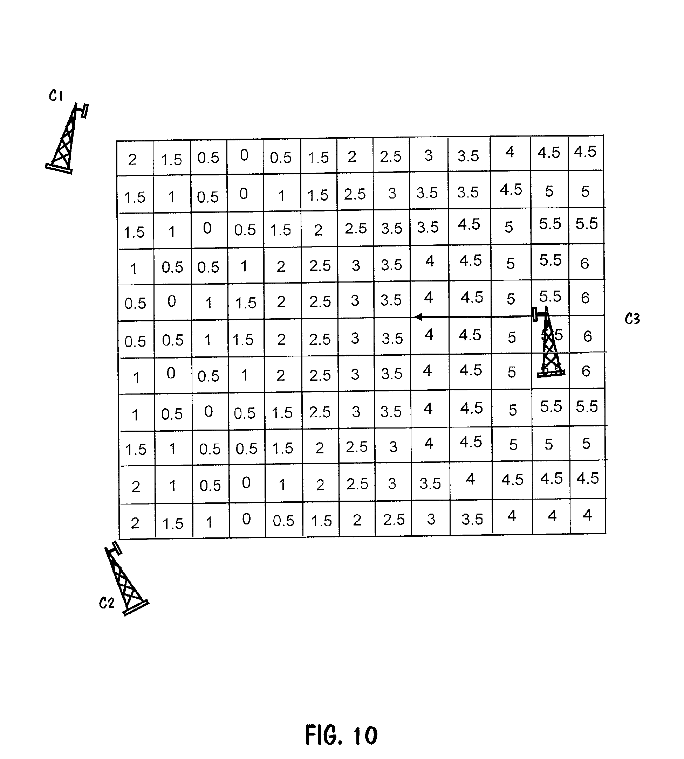

The penalty functions in this example are very simplified, and are only meant to illustrate the principle of the method. Figure **8** illustrates the values given by a penalty function F(C1) = | Rx_e - Rx_m | for the squares of the serving cell C1. In the figure **9** values given by a penalty function F (C2) = | Rx_e - Rx_m| ^2 for the squares of the first neighbour cell C2 are illustrated and in the figure **10** values given by a penalty function F (C3) = | Rx_m-Rx_e | / 2 for the squares of the second neighbour cell C3 are illustrated. Consequently, the penalty function is applied to each measurement parameter and corresponding prediction parameter in order to obtain a probability value regarding the location of the mobile terminal for each square. A small value in the figures depicts a condition in which the measured and the predicted value differ only slightly from each other, i.e. the probability for the mobile station to be located in the area confined by the grid concerned is high. Since the determination of the penalty function is influenced by the above-stated factors concerning the base station, situations where the mobile station is located in the wrong side of the service area can be excluded. Such areas include areas covered by the back beam of the antenna or a case in which the network design system has used an overly optimistic propagation model for predicting the area. The latter situation could occur in a service area generated across a sea bay by a too distant base station. In this case the penalty function gives a low probability value for the service value prediction of the cell. This can be seen in the probability values of the figure **10** in those squares where two predicted locations of the mobile station were obtained in the back beam area of the antenna unit, for the field strength of cell C3, in the ground map of figure **7**.

The squares for which value 0 is given by the penalty function, predict the location of the mobile station with the highest probability. Such squares appear in the prediction 5 of the serving cell C1 (figure **8**), in the prediction 16 of the first neighbour cell C2 (figure **9**) and in the prediction 8 of the second neighbour cell (figure **10**). Value 0 represents an ideal case. In actuality e.g. value 9 given by the penalty function could represent the highest probability.

Once a table containing the values of the penalty function is generated for each of the cells C1-C3, the results contained in each square of the three tables are combined into a single penalty value. This is done using a, in regard to each one of its arguments, non-decreasing combination function, and the results are placed in the corresponding square of a single table. The simplest functions are the additions and multiplications of the values of the penalty function. The various cells (base stations) can be emphasized in different ways at this point.

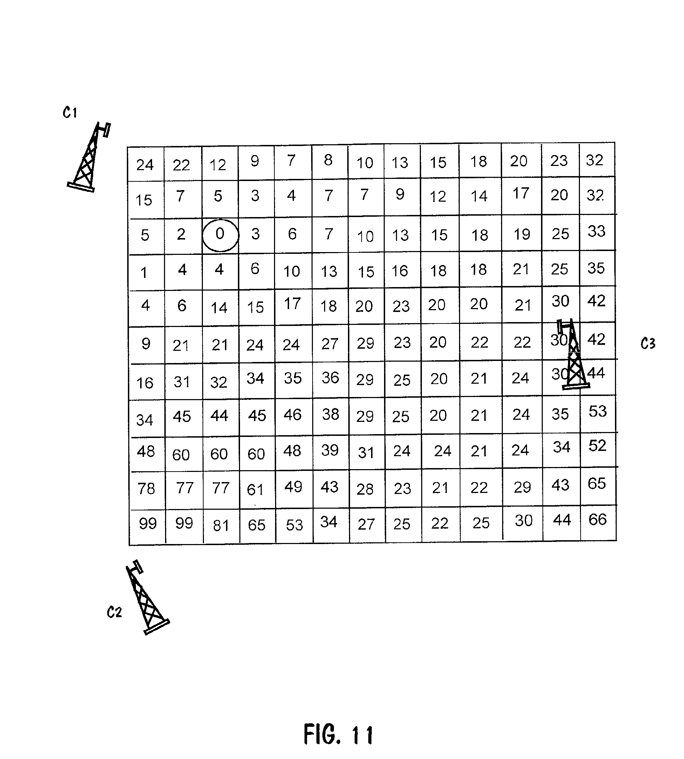

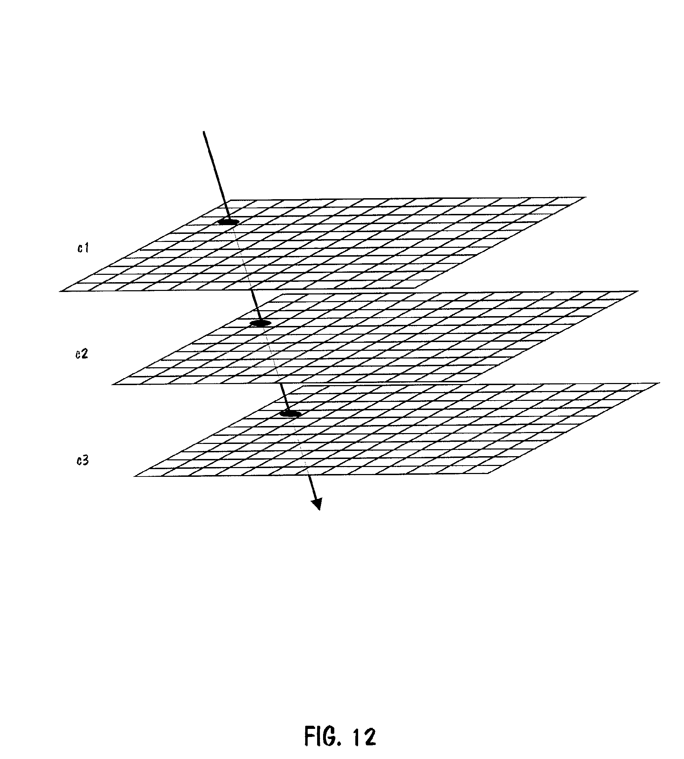

Determining the location can be accomplished e.g. in the manner illustrated in figure **12** utilizing a special combination function. The most probable values determined for the cells C1-C3 by the penalty function are transferred to a single plane by determining a common point of intersection for the planes, and projecting it to a single plane. For the sake of clarity only one point of intersection is shown in the figure. In actuality, a point of intersection is determined for each of the corresponding squares of the planes. The minimum results of the combination function determines the final most probable location of the mobile station. The final location determined for the mobile station is illustrated by the circled value in figure **11**. This location data predicted by the penalty and combination functions, i.e. the geographical co-ordinates of the location, is sent to the serving server.

The serving server uses one or more databases from which it picks the names and location data of gas stations located within a previously specified distance from the co-ordinates of the mobile station, and sends the messages containing the list to the mobile station.

The contents and manner of presenting the information depends on the service provider and the terminal used. From the point of view of the invention, the manner in which the information is presented in the terminal of the recipient is not important.

Even though the invention has been described above by reference to examples in the figures, it is obvious for a professional in this field that it is possible to modify the invention within the framework of the idea of the invention presented above and in the adjoining patent claims.

For instance, the serving server and the positioning server may be either physically separate servers or a single server. Their location may also vary. The coverage area prediction data sent by the design system can be sent in any useful form most convenient for the application. The ground map must be understood in a wider sense than a geographical map. The ground map does not necessarily contain any geographical information at all. It may for example contain co-ordinates and vectors representing the direction of motion and velocity of the mobile terminal. The location data of the terminal may also be relative location data.

In the foregoing example a model of radio coverage area of three cells was used, i.e. a three-dimensional model consisting of three separate planes. The method may also be used in situations where the mobile terminal is located in the sparsely populated countryside, and the location has to be determined by means of the predicted radio coverage area of a single cell. In cities, on the other hand, a model with more dimensions can be used, i.e. the predicted coverage areas of more than three cells can be used.

The positioning server may also request in real-time the information needed for determining the location from the design system. This alternative of implementation is however more difficult and slow to realize than the one described in the example. Other data besides the quality of the co-ordinates may also be notified in connection with the co-ordinate data. The most probable location of the mobile station, obtained as an end result, may also be given in some other form besides co-ordinates.

## Claims

1. A method for locating a mobile terminal in a cellular-based radio system,
**characterized in that**
receiving at least one measurement parameter, representing the electro-magnetic field of at least the serving cell, and, measured by the terminal,
using a model representing the radio coverage area of at least the serving cell, which model is formed so that to a set of prediction parameters, representing the electro-magnetic field in the radio coverage area of the cell, are added to their location data in the radio coverage area of the cell,
computing the probability values of the location of the terminal in relation to the location data of the prediction parameters of the model through applying a previously determined penalty function to the measurement parameter and the corresponding prediction parameter,
combining the probability values, depicting the location of the terminal, into a set of probable locations, which probability values are computed by using a model of the radio coverage area of the serving cell, and possibly a model of the radio coverage area of at least one neighbour cell, and
narrowing computationally the set of probable locations into a single location data which specifies the location of the terminal.

2. A method as in claim 1 **characterized in that** the prediction parameters are defined by utilizing the network design tool of the network design system.

3. A method as in claim 1 **characterized in that** the model of the radio coverage area of the cell is realized as a raster grid in which the size and shape of the square are determined separately for each cell.

4. A method as in claim 1 **characterized in that** the model of the radio coverage area of the cell is realized as a raster grid in which the size and shape of the square are determined separately for each service.

5. A method as in claim 1 **characterized in that** the model of the radio coverage area of the cell is realized as a raster grid in which the size and shape of the square are determined separately for each surroundings.

6. A method as in claim 1 **characterized in that** in determining the prediction parameters applying to a cell, the parameters of the base station contained in each cell, including electrical parameters, parameters relating to the location and particular parameters relating to the qualities of the surroundings of the base station, are used.

7. A method as in claim 1 **characterized in that** the prediction parameters are prediction values for the strength value of the RF-signal transmitted by the base station, in different geographical points of the radio coverage area in question.

8. A method as in claim 1 **characterized in that** the prediction parameters are prediction values for the transit time delay of the signal, transmitted by the base station and received by the receiving end, in different geographical points of the radio coverage area in question.

9. A method as in claim 1 **characterized in that** the prediction parameters are prediction values for the bit energy of the signal, transmitted by the base station and received by the receiving end, in different geographical points of the radio coverage area in question.

10. A method as in claim 1 **characterized in that** the terminal sends the measurement parameter it has measured as a response to a transmit request.

11. A method as in claim 1 **characterized in that** a set of unique prediction parameters, representing the electro-magnetic field of the radio coverage area of the cell, are determined automatically, in previously specified intervals, for each cell in the network.

12. A method as in claim 1 **characterized in that** the model of the radio coverage area of the cell is generated in the network design system.

13. A cellular-based radio system locating the terminal, **characterized in that** the radio system comprises of
generation means for generating a model of the radio coverage area of a cell, by attaching to each prediction parameter the corresponding location data in the radio coverage area of the cell,
computational functionality that computes the probability value for the location of the terminal, in relation to the location data of the prediction parameter of the cell, by applying a previously determined penalty function to the measurement parameter and to the corresponding prediction parameter,
combination means for combining the probability values, computed by the means of a model of the radio coverage area of the serving cell, and possibly a model of the radio coverage area of at least one neighbour cell, depicting the location of the terminal, into a set of probable locations, and
narrowing means for narrowing the set of probable locations computationally into a single data specifying the location of the terminal.
